# EUROPÄISCHE PATENTSCHRIFT

(11) **EP 1 218 094 B1**
(45) Veröffentlichungstag und Bekanntmachung des Hinweises auf die Patenterteilung: **05.11.2003**
(21) Anmeldenummer: 00964242.2
(22) Anmeldetag: 27.09.2000
(51) Int. Cl.: B01F 13/00, A61C 9/00, B01F 9/10

(54) **DYNAMISCHER MISCHER**
DYNAMIC MIXER
MELANGEUR DYNAMIQUE

(30) Priorität: 01.10.1999 DE 19947331
(43) Veröffentlichungstag der Anmeldung: 03.07.2002
(73) Patentinhaber: 3M Espe AG, 82229 Seefeld (DE)
(72) Erfinder: WAGNER, Ingo, 82237 Steinebach (DE); NIRSCHL, Hermann, 82229 Seefeld (DE)
(86) Internationale Anmeldenummer: EP0009447
(87) Internationale Veröffentlichungsnummer: WO01024919

(56) Entgegenhaltungen:
- EP-A- 0 492 412
- DE-A- 1 454 798
- DE-A- 3 237 353
- DE-A- 3 522 087
- DE-U- 29 705 741
- US-A- 3 831 850
- US-A- 5 487 606

## Beschreibung

Die Erfindung betrifft einen dynamischen Mischer, der insbesondere im Dentalbereich zum Mischen von u.a. hochviskosen Pasten Verwendung findet.

Zum Mischen von hochviskosen Zwei- oder Mehrkomponentenpasten, insbesondere dentaler Abformmassen, werden statische und dynamische Mischer verwendet. Beispiele für dynamische Mischer finden sich in EP-A-0 492 412 und DE-U1-297 05 741.

Die bekannten dynamischen Mischer weisen an ihrem hinteren Ende (Einlassseite) eine zentrische Sechskantöffnung zum Ankoppeln einer Antriebswelle für den rotierenden Innenkörper des Mischers sowie Einlassstutzen zur Zuführung der zu mischenden Komponenten auf. Beim Ansetzen eines neuen Mischers müssen daher mindestens drei Anschlüsse gleichzeitig auf die entsprechenden Gegenstücke der Ausbringvorrichtung ausgerichtet werden, woraus eine verhältnismäßig komplizierte Handhabung resultiert.

Der mittige Anschluss zum Ankoppeln der Mischerwelle führt ferner dazu, dass die Einlassstutzen für die Komponenten verhältnismäßig weit von der Mischerachse entfernt sind. Dies bedeutet, dass für die Eintrittsstutzen verhältnismäßig kleine Querschnitte übrigbleiben oder die Komponentenstränge im Einlassbereich verhältnismäßig stark nach innen umgelenkt werden müssen, wenn nicht ein unnötig großer Mischer in Kauf genommen werden soll. In beiden Fällen ergibt sich ein verhältnismäßig hoher Strömungswiderstand für die Komponenten, woraus hohe Vorschub- und Mischkräfte resultieren.

Bei den bekannten Mischern ist nur der rotierende innere Mischerkörper mit Mischflügeln versehen, während die Innenwand des Mischergehäuses glatt ist. Um mit derartigen Mischem eine ausreichend homogene Mischung zu erzielen, ist eine entsprechende axiale Länge erforderlich. Dies wiederum führt dazu, dass die im Mischer verbleibende Restmenge unerwünscht hoch ist.

Der Erfindung liegt die Aufgabe zugrunde, einen dynamischen Mischer bereitzustellen, bei dem die beim Stand der Technik auftretenden Probleme zumindest teilweise vermieden werden. Eine speziellere Aufgabe der Erfindung kann darin gesehen werden, einen dynamischen Mischer, insbesondere für dentale Massen, anzugeben, der eine gründliche Mischung der Komponenten mit einfacheren Mitteln gestattet.

Diese Aufgabe wird mit einem Mischer und einem diesen umfassenden Mischgerät gelöst, wie es in den Ansprüchen beschrieben wird.

Die Begriffe "umfassen" und "enthalten" im Sinne der Erfindung leiten hierbei eine nichtabschließende Aufzählung von Merkmalen ein.

Unter dem Begriff dynamischer Mischer sind Mischer zu verstehen, bei denen im Gegensatz zu statischen Mischem, mindestens ein Bestandteil drehbar gelagert ist.

Der Begriff Mischkammer beschreibt den Bereich des Mischers, wo die eigentliche Mischung der durch die Einlassöffnungen eintretenden Substanzen überwiegend stattfindet. Das zum Mischen benötigte Füllvolumen der Mischkammer ist grundsätzlich beliebig und ist in Abhängigkeit vom Verwendungszweck des Mischers und den Eigenschaften der zu mischenden Substanzen zu wählen. Üblicherweise liegt das Füllvolumen im Bereich von 0,1 bis 10 ml, vorzugsweise im Bereich von 0,5 bis 3 ml.

Unter Einlassöffnungen sind die Öffnungen im hinteren Bereich des Mischers zu verstehen, die die zu mischenden Substanzen passieren müssen, um in die Mischkammer zu gelangen. Die Einlassöffnungen sind Teil des Abschlusselements oder bilden dieses vollständig.

Die Form der Öffnungen ist grundsätzlich beliebig. Vorteilhaft sind ovale Öffnungen und/oder Öffnungen in Nieren- oder Sichelform, insbesondere Öffnungen mit abgerundeten Kanten und Ecken.

Diese Gestaltung ermöglicht die Ausnützung nahezu der gesamten für die Eintrittsöffnungen zur Verfügung stehenden Oberfläche eines dynamischen Mischers. Eine Aussparung für eine zentral einkoppelbare Mischerwelle ist nicht erforderlich.

Die erfindungsgemäße Vorrichtung weist vorzugsweise mindestens zwei, gegebenenfalls aber auch drei oder vier Öffnungen auf.

Die Öffnungen sind üblicherweise symmetrisch zueinander angeordnet.

Mit Auslass ist der Bereich des Mischers gemeint, durch den die Substanzen den eigentlichen Mischraum verlassen.

Der Mischer kann eine oder mehrere Auslassöffnungen, vorzugsweise zwei, drei oder vier aufweisen. Die Auslassöffnungen können nach Art eines Strangteilers angeordnet sein, sie können aber auch in einen weiteren Hohlraum münden, über den letztlich die Abgabe der gemischten Substanzen erfolgt. Der oder die Auslassöffnungen können sich somit auch innerhalb des Mischers befinden.

Der Begriff Antriebsbereich umfasst insbesondere den Bereich des Mischers, über den der Rotor durch Einwirkung äußerer Kräfte in Rotationsbewegung versetzt werden kann. Zweckmäßigerweise ist der Antriebsbereich derart gestaltet, dass eine möglichst verlustfreie Kraftübertragung stattfinden kann.

Je nach Art der Kraftübertragung, die kraft- und/oder formschlüssig sein kann, verfügt der Antriebsbereich über Mitnehmer, Riffelungen, Zahnräder, und/oder eine angerauhte Oberfläche. Es kann auch günstig sein, auf die Oberfläche des Antriebsbereichs einen reibungsvergrößemden Zusatz, beispielsweise in Form eines gummiartigen Rings aufzubringen.

Der Antriebsbereich befindet sich außermittig zur gemeinsamen Achse, vorzugsweise an der Außenseite des Gehäuses.

Unter dem Begriff Stator sind im Gegensatz zum Begriff Rotor das oder die Elemente des Mischers zu verstehen, die nicht gewollt durch Einwirkung von äußeren Kräften in Rotationsbewegung beim Mischen versetzt werden.

Der erfindungsgemäße Mischer weist u.a. folgende Vorteile auf:

Dadurch, dass der Innenkörper des Mischers den Stator und das Gehäuse den Rotor bildet, ist es möglich, die Einlässe für die Komponenten dicht an der Mischerachse anzuordnen, so dass trotz kleinem Gesamtquerschnitt des Mischers für die Einlassöffnungen verhältnismäßig große Querschnittsflächen zur Verfügung stehen. Wegen der größeren Einlassquerschnitte kommt das Gerät mit geringeren Vorschubkräften aus.

Beim Betrieb des Mischers treten im Vergleich zu den aus dem Stand der Technik bekannten Mischern niedere Durchströmkräfte auf, da bedingt durch den Antrieb des Mischers über das Gehäuse eine geradlinigere Führung der Substanzströme möglich ist. Zudem ermöglicht dies eine kompaktere Bauweise des Mischers.

Falls die Einlassöffnungen alle die gleich Form und Größe aufweisen, ist das Anbringen des Mischers auf Auslassöffnungen von Kartuschen, in denen sich die zu mischenden Substanzen befinden können, zusätzlich erleichtert, da nicht auf die Orientierung der Einlassöffnungen relativ zu den Auslassöffnungen der Kartusche geachtet werden muss.

Femer ist kein zusätzliches Einfügen einer Mischerwelle beim Aufsetzen des Mischers auf die Ausbringöffnungen der Kartusche mangels des Anschluss für eine zentrale Mischerwelle notwendig.

Vorzugsweise ist das Antriebselement außerhalb der Achse um die der Rotor gedreht wird, angeordnet. Eine außerhalb der Mischerachse liegende Anordnung zum Eingriff mit dem Antrieb der jeweiligen Ausbringvorrichtung ist deshalb vorteilhaft, weil aus dem verhältnismäßig großen Durchmesser ein entsprechend langer Hebelarm resultiert, mit dem sich das für den Antrieb des Rotors benötigte Drehmoment leichter übertragen lässt.

Gleichzeitig wird das Ansetzen des Mischers an die Ausbringvorrichtung erleichtert, da anstelle der bei der Sechskantöffnung nach dem Stand der Technik vorhandenen sechs Winkelpositionen an dem erfindungsgemäß vorgesehenen größeren Außendurchmesser bei Verwendung eines oder mehrerer Zahnräder eine viel größere Anzahl von passenden Positionen vorgesehen werden kann.

Eine Gestaltung des Mischers, bei der sich das Antriebselement am Außenumfang des Gehäuses befindet ermöglicht eine kompakte Bauform und einfachen Ankopplung des Antriebs.

Ein kraftschlüssiger Antrieb, kann die Handhabung des Mischers dergestalt verbessern, dass Probleme der Ausrichtung beim Ansetzen des Mischers weitgehend vermieden werden.. Zusätzlich ist eine vereinfachte Reinigung des Antriebs möglich.

Das Vorhandensein von Mischerflügeln sowohl am Rotor als auch am Stator ermöglicht wegen der über den gesamten Strömungsquerschnitt der Mischkammer auftretenden Scherung der Komponenten eine intensivere Durchmischung, so dass die Baugröße des Mischers, insbesondere seine axiale Länge, im Vergleich zu herkömmlichen Mischem deutlich verringert werden kann, ohne dass das Mischergebnis wesentlich beeinflusst wird.

Das Volumen der Mischkammer kann einerseits durch eine im Vergleich zum Stand der Technik reduzierte Baulänge des Mischers und/oder andererseits durch Anformung zusätzlicher Mischflügel in der Mischkammer verringert werden.

Die vorliegende Erfindung ermöglicht somit eine erhebliche Reduzierung der Verwurfmenge an gemischter Substanz, die maßgeblich durch das Volumen der Mischkammer bestimmt ist.

Die Mischerflügel sind üblicherweise symmetrisch auf einer Ringebene an der Außenseite des Innenkörpers und der Innenseite des Gehäuses angeordnet. Pro Ringebene befinden sich vorzugsweise zwei, drei oder vier Mischerflügel.

Die Anzahl der Ringebenen ist grundsätzlich beliebig und abhängig von der Dimension der Mischkammer. Ferner ist die zu wählende Anzahl abhängig vom Verwendungszweck des Mischers und den Eigenschaften der zu mischenden Substanzen zu wählen. Im Dentalbereich hat sich zum Mischen hochviskoser Substanzen eine Anzahl von Ringebenen im Bereich von zwei bis acht, vorzugsweise von zwei bis vier bewährt. Günstig ist es auch, wenn die Anzahl der Ringebenen auf der Innenseite des Gehäuses größer ist als auf der Außenseite des Innenkörpers.

Die Gestaltung des Mischers, bei der ein Auslass im vorderen Bereich des Innenkörpers ausgebildet ist, ist insbesondere dann zweckmäßig, wenn eine Rotation des austretenden Pastenstrangs vermieden werden soll. Außerdem kann vom Mischerauslass direkt in ein Applikationsinstrument abgefüllt werden. Mit steigender Zahl der Auslässe lässt sich die Fördermenge an gemischter Substanz erhöhen.

Die Abmessungen des Mischers sind in Abhängigkeit vom Verwendungszweck zu wählen und grundsätzlich beliebig.

Die Länge und/oder der Durchmesser des Mischers liegen üblicherweise im Bereich von 5 bis 1000 mm, vorzugsweise im Bereich von 10 bis 100 mm.

Die Fläche der Einlassöffnungen liegt üblicherweise im Bereich von 0,1 bis 5000 mm², vorzugsweise im Bereich von 1 bis 400 mm².

Vorteilhaft kann auch sein, wenn die Strömungswege, die die zu mischenden Substanzen von der Einlassöffnung bis zum Auslass zu passieren haben, ein unterschiedliches Volumen aufweisen. Dies kann durch eine unterschiedliche Weglänge und/oder den Einbau einer sogenannten Vorkammer erreicht werden. Dies stellt sicher, dass zu Beginn des Mischvorgangs die eine

Substanz immer vor der anderen Substanz in die Mischkammer eintritt. Eine spezielle Ausführungsform und weitere Hintergründe werden beispielsweise in der EP-A-0 993 863 beschrieben.

Die erfindungsgemäße Vorrichtung in der Form eines dynamischen Mischers umfasst üblicherweise mindestens zwei voneinander trennbare Bauteile, den Stator und das Gehäuse, die unabhängig voneinander gefertigt werden können.

Geeignete Materialien für den Mischer umfassen Metalle, wie Eisen, Aluminium, Titan, Kupfer, Zink oder deren Legierungen und/oder Kunststoffe, wie PE, OPP, PP, PTFE, PC, POM, PA und ABS oder deren Mischungen oder Copolymere. Vorzugsweise werden die Materialien in faserverstärkter und/oder gefüllter Form verwendet.

Geeignete Fasern und Füllstoffe umfassen Glasfasem/ -partikel und kohlenstofffasern/ -partikel.

Geeignete Mischer lassen sich beispielsweise im Spritzgussverfahren, gegebenenfalls in einem 2-K-Spritzgussverfahren herstellen.

Je nach anzumischender Substanz ist der Mischer vorzugsweise als Wegwerfteil ausgebildet und nur für den einmaligen Gebrauch bestimmt.

Der Mischer wird üblicherweise mit einer Drehzahl im Bereich von 10¹ bis 10⁴, vorzugsweise im Bereich von 10² bis 10³ U/min betrieben.

Die erfindungsgemäßen Mischer lassen sich auf allen Gebieten der Technik, insbesondere zum Anmischen von hochviskosen, pastösen und/oder dickflüssigen Massen einsetzen.

Hierunter sind allgemein Stoffe zu verstehen, die im Lagerzustand getrennt in mindestens zwei Komponenten aufbewahrt werden und vor der Verwendung gemischt werden müssen.

Beispielhaft seien genannt: Kleber, Fugendichtmassen, Lacke.

Vorzugsweise lassen sich die erfindungsgemäßen Mischer im Dentalbereich einsetzen. Besonders eignen sich die erfindungsgemäßen Vorrichtungen zum Anmischen hochviskoser Abformmaterialien, die beispielsweise aus Schlauchbeuteln, die in geeignete Kartuschen eingeschoben sind, mit elektrisch angetriebenen Kolben ausgepresst werden. Denkbar und möglich ist auch die Ausbringung der Materialien aus geeigneten Kartuschen, die direkt mit dem Material befüllt sind ohne dass ein Schlauchbeutel verwendet wird.

Der Begriff hochviskose Massen umfasst alle Massen mit einer Viskosität bestimmt durch Konsistenzprüfung nach DIN 4823 Klasse 0 bis 3, die mit einem Durchmesser von kleiner 80 mm gemessen werden.

Als Materialien seien beispielhaft genannt Silikone, Polyether, Epoxide und Polyurethane.

Zum Betreiben des Mischers dient üblicherweise ein Mischgerät, umfassend eine Fördereinheit für die zu mischenden Substanzen und eine Antriebseinheit für den dynamischen Mischer. Die Antriebseinheit eines geeigneten Mischgeräts mündet nicht in die gemeinsame Achse, die von Gehäuse und Innenkörper des Mischers gebildet wird. Mögliche Ausführungen für geeignete Antriebseinheiten sind in Zusammenhang mit den Figuren beschrieben.

Gegenstand der Erfindung ist auch die Verwendung des Mischers bzw. des oben beschriebenen Mischgeräts insbesondere zum Bereiten von Dentalmaterialien.

Ein geeignetes Verfahren umfasst dabei die Schritte: a) fortwährendes Einbringen von mindestens zwei zu mischenden Substanzen in die Einlassöffnungen des Mischers, b) Drehen des Gehäuses des Mischers.

Gegenstand der vorliegenden Erfindung ist auch ein Kit, umfassend den dynamischen Mischer und eine Kartusche mit mindestens zwei Öffnungen und mindestens zwei Kammern zur Aufnahme getrennt zu lagernder Substanzen. Die Einlassöffnungen des Mischers sind dabei mit den Auslassöffnungen der Kartusche reversibel verbindbar oder bereits fest verbunden.

Ausführungsbeispiele der Erfindung werden nachstehend anhand der Zeichnungen näher erläutert. Darin zeigt
- Figur 1: einen Längsschnitt durch einen dynamischen Mischer,
- Figur 2: eine Stimansicht des Mischers, betrachtet in Richtung des Pfeiles II nach Figur 1,
- Figur 3: eine Draufsicht auf den Mischer einschließlich eines Antriebselements, betrachtet in Richtung des Pfeiles III nach Figur 1,
- Figur 4: das Gehäuse des Mischers nach Figur 1 und 2,
- Figur 5: den Innenkörper des Mischers nach Figur 1 und 2,
- Figur 6: einen Längsschnitt durch das Gehäuse eines Mischers gemäß einem weiteren Ausführungsbeispiel, und
- Figur 7: eine teilweise geschnittene Ansicht des Innenkörpers des Mischers nach Figur 6.
- Figur 8: eine Draufsicht auf das Auslassende eines Mischers mit Antriebselement.

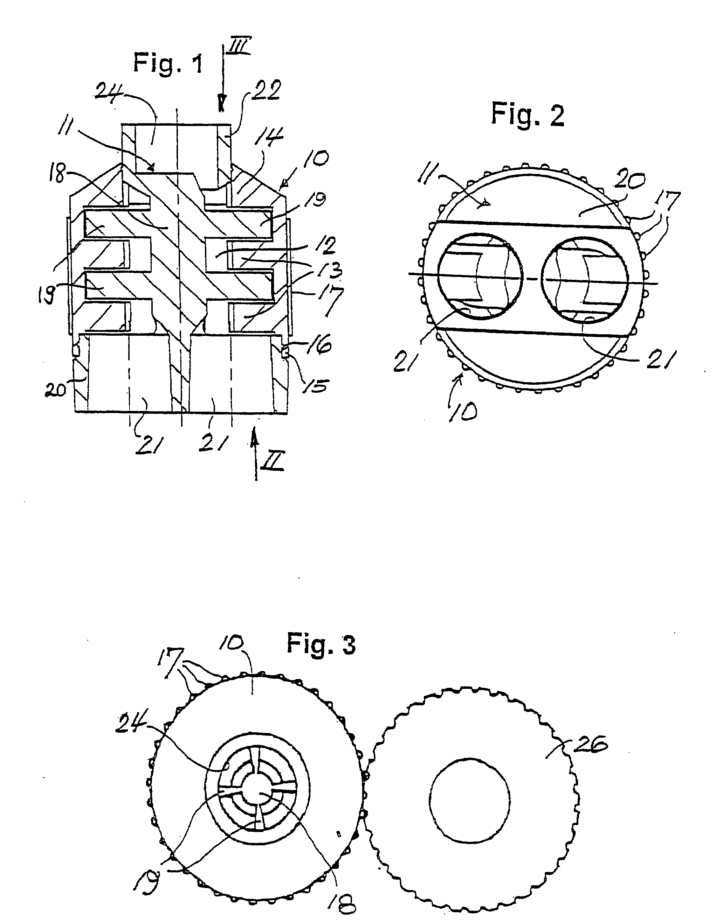

Der in Figur 1 bis 5 veranschaulichte dynamische Mischer umfasst ein Gehäuse 10, das den Rotor des Mischers bildet, und einen Innenkörper 11, der den Stator bildet.

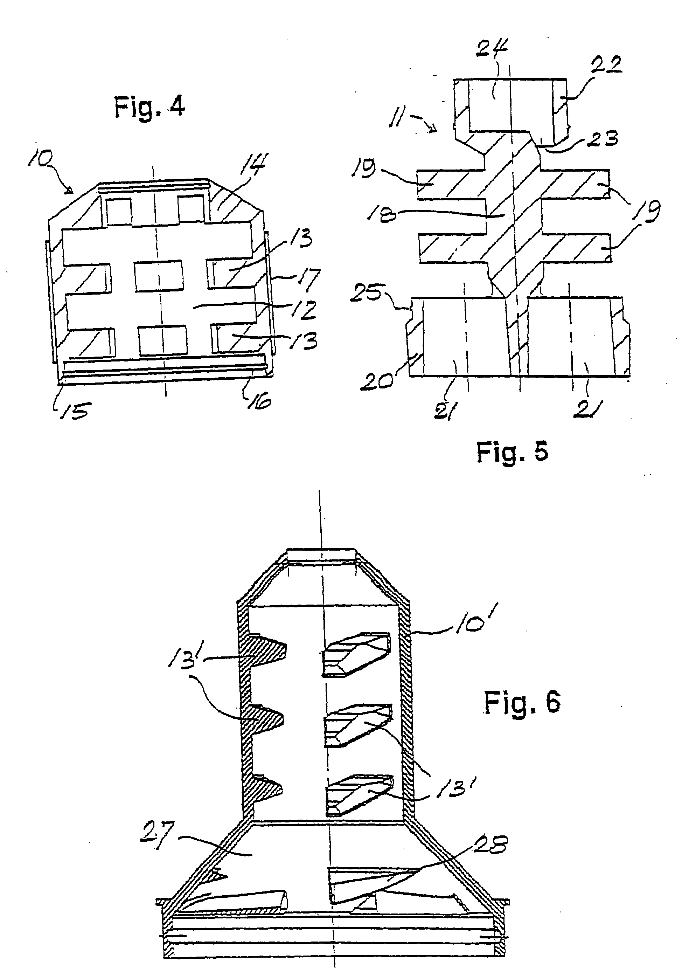

Gemäß Figur 1 und 4 ist das Gehäuse 10 Bestandteil einer im wesentlichen zylindrische Mischkammer 12, von deren Innenwand gegebenenfalls Mischerflügel 13 radial nach innen ragen. Die Mischerflügel 13 sind in Axialrichtung des Mischergehäuses 10 in zwei Ebenen hintereinander angeordnet, wobei in jeder Ebene vier Mischerflügel um jeweils 90° versetzt sind.

Am Austrittsende weist das Gehäuse 10 mindestens einen ringförmigen Einsprung 14 auf, der zur Lagerung an dem Innenkörper 11 dient. Das entgegengesetzte, dem Einlass zugewandte Ende des Gehäuses 10 ist beispielsweise mit einem Ringflansch 15 versehen, der eine innere Ringnut 16 zur Axialführung des rotierenden Gehäuses aufweisen kann.

Wie insbesondere aus Figur 2 und 3 ersichtlich, ist das Gehäuse 10 über den gesamten Außenumfang seines zylindrischen Teils mit einem Antriebsbereich 17, beispielsweise einer Verzahnung oder Riffelung, versehen.

Gemäß Figur 1 und 5 weist der Innenkörper 11 vorzugsweise einen mittigen zylindrischen Kem 18 auf, an den beispielsweise in zwei axial versetzten Ebenen Mischerflügel 19 ansetzen. In jeder Ebene sind gegebenenfalls vier um jeweils 90° versetzte Mischerflügel 19 vorhanden.

Am Einlassende weist der Kern 18 ein Abschlusselement 20 auf, das beispielsweise von zwei diametral gegenüberliegenden Einlasskanälen 21 durchsetzt wird. Am Austrittsende trägt der Kern 18 einen Rohrstutzen 22, dessen Verbindung mit dem Kern 18 an mindestens einer Stelle zur Bildung einer Durchtrittsöffnung 23 unterbrochen ist und der am anderen Ende einen Auslasskanal 24 des Mischers bildet.

In der in Figur 3 gezeigten Draufsicht auf das Austrittsende des Mischers sind auch die vier Mischerflügel 19 des stationären Kerns 18 zu sehen.

Der in Figur 5 gezeigt Innenkörper 11 ist in dem in Figur 4 gezeigten Gehäuse 10 derart angeordnet, dass die Mischerflügel 19 des Innenkörpers 11 in die Zwischenräume zwischen den Mischerflügeln 13 bzw. den Mischerflügeln 13 und dem ringförmigen Einsprung 14 des Gehäuses 10 eingreifen. Gleichzeitig verrastet die am unteren Ringflansch 15 des Gehäuses 10 gegebenenfalls vorgesehene Ringnut 16 mit einem an dem hinteren Abschlusselement 20 des Innenkörpers 11 vorhandenen Ringwulst 25. Dadurch sind Innenkörper 11 und Gehäuse 10 in Axialrichtung so ausgerichtet, dass die Mischerflügel 13, 19 mit geringem gegenseitigen Abstand relativ zueinander bewegbar sind. Es ist aber auch möglich, dass eine solche Ringnut nicht vorhanden ist und die axiale Ausrichtung des Innenkörpers überwiegend durch die Mischerflügel erfolgt, wodurch sich allerdings ein höherer Reibungswiderstand ergeben kann.

Eine weitere axiale Lagerung von Gehäuse 10 und Innenkörper 11 wird am hinteren Ende durch den Eingriff der Abschlussplatte 20 des Innenkörpers 11 in den Ringflansch 15 des Gehäuses 10 und am Austrittsende durch den Eingriff des Rohrstutzens 22 des Innenkörpers 11 in den ringförmigen Einsprung 14 des Gehäuses 10 erreicht.

Beim Ansetzen an eine (nicht gezeigte) Ausbringvorrichtung, beispielsweise ein Mischgerät, werden die beiden Einlasskanäle 21 des Innenkörpers 11 auf entsprechende Austrittsnippel der Vorrichtung bzw. von Kartuschen, die in die Vorrichtung eingelegt werden, aufgesteckt. Wird die Ausbringvorrichtung in Betrieb genommen, so gelangt ein von einem Motor der Vorrichtung in Drehung versetztes Antriebselement 26, bei dem es sich in dem Figur 3 gezeigten Ausführungsbeispiel um ein Zahnrad handelt, in Eingriff mit der äußeren Verzahnung oder Riffelung 17 des Gehäuses 10, so dass das Gehäuse 10 in Drehung um den stationär gehaltenen Innenkörper 11 versetzt wird.

In Figur 3 besteht das Antriebselement 26 aus einem einzigen Zahnrad. Vorteilhafter ist eine Gestaltung, bei der mehrere Antriebszahnräder über den Umfang des Gehäuses 10 verteilt in die Verzahnung oder Riffelung 17 eingreifen, weil dadurch gleichzeitig ein seitliches Ausweichen des Mischers und eine einseitige Belastung vermieden werden.

Anstelle des in Figur 3 gezeigten Zahnrades kann das Antriebselement 26 auch ein von einem Motor der Vorrichtung angetriebener Zahnriemen oder eine das Gehäuse 10 umschließende Muffe (Hohlritzel) sein, wie es in Figur 8 gezeigt ist. In einer weiteren Variante kann der Außenumfang des Gehäuses 10 glatt sein und mit einem oder mehreren Antriebs-Reibrädern oder einem Reibriemen zusammenarbeiten.

In einer bevorzugten Ausführungsform kann der Antrieb auch über Mitnehmerstifte erfolgen, die an Vorsprünge an der Gehäuseaußenseite des Mischers eingreifen können. Vorteilhaft ist eine Anzahl von Mitnehmerstiften im Bereich von 1 bis 5, besonders bevorzugt, 2 bis 4, insbesondere 3.

Gleichzeitig drücken in der Vorrichtung vorgesehene Kolben die beiden Komponenten in die Eintrittskanäle 21. Die durch die ineinandergreifenden Mischerflügel 13, 19 intensiv miteinander gemischten Komponenten werden durch die von den Kolben bewirkte Ausbringkraft in dem Mischer nach vorne gedrückt, wobei die gemischte Paste durch die Durchtrittsöffnung 23 in den Auslasskanal 24 gelangt und von dort nach außen abgegeben wird.

Der dynamische Mischer gemäß dem obigen Ausführungsbeispiel dient zur Herstellung einer Paste aus zwei Komponenten. Zur Erzeugung von Mischungen aus drei oder mehr Komponenten weist der Innenkörper 11 bzw. das Abschlusselement 20 eine entsprechend größere Anzahl von Einlasskanälen 21 auf, die vorzugsweise, aber nicht zwingend, jeweils gleichwinklig um die Achse verteilt sind.

Ebenso handelt es sich bei den obigen Angaben bezüglich der Anzahl von Mischerflügel-Ebenen, der Anzahl von Mischerflügeln 13, 19 pro Ebene und der Verteilung der Mischerflügel über den Umfang nur um Ausführungsbeispiele. Die genannten Zahlen und Angaben sind in Abhängigkeit von den Eigenschaften der Komponenten und des herzustellenden Gemisches frei wählbar.

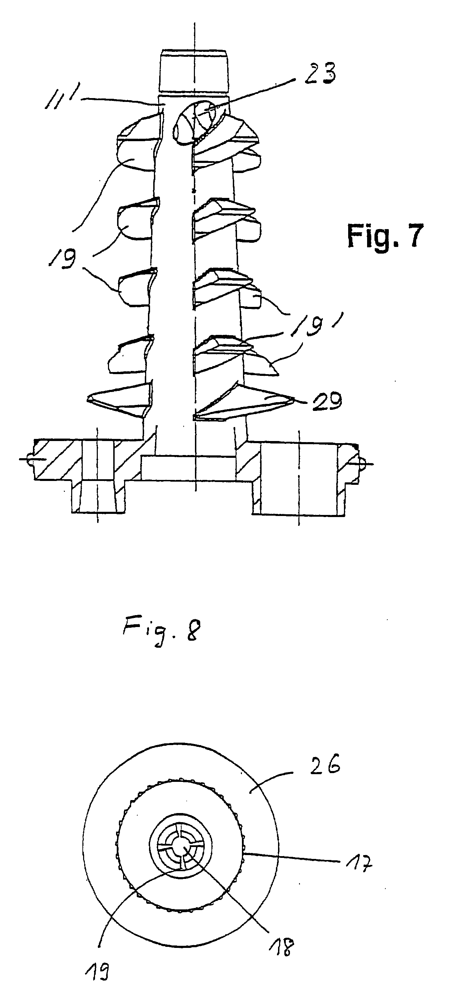

Das in Figur 6 und 7 gezeigte Ausführungsbeispiel unterscheidet sich von dem nach Figur 1 bis 5 unter anderem dadurch, dass die Einlasskanäle unterschiedliche Querschnitte haben und von der gemeinsamen Achse von Gehäuse 10' und Innenkörper 11' weiter entfernt sind. Dementsprechend haben das Gehäuse 10' und der Innenkörper 11' einen sich konisch verengenden Eintrittsbereich 27, in dem entsprechend längere Mischerflügel 28 (im Gehäuse 10') und 29 (am Innenkörper 11') vorgesehen sind. Im zylindrischen Teil der Mischkammer 12' weist das Gehäuse ferner drei Ebenen mit jeweils drei gleichwinklig um die Achse versetzten Mischerflügeln 13' auf, die in Zwischenräumen zwischen den in insgesamt vier Ebenen angeordneten Mischerflügeln 19' des Innenkörpers 11' liegen. Auch am Innenkörper 11' sind in jeder Ebene drei Mischerflügel 19' gleichwinklig um die Achse verteilt.

Der dynamische Mischer nach Figur 6 und 7 weist gegenüber dem nach Figur 1 bis 5 zwischen den jeweiligen Mischerflügeln 13', 19' etwas größere Abstände auf und ist daher für höherviskose Massen geeignet. Für eine ausreichend intensive Durchmischung sind hier die Mischerflügel 13', 19' in einer größeren Anzahl von Ebenen angeordnet, woraus sich eine etwas erhöhte axiale Länge des Mischers ergibt.

### Bezugszeichenliste

- 10: Gehäuse
- 11: Innenkörper
- 12: Mischkammer
- 13: Mischerflügel (des Gehäuses 10)
- 14: Einsprung
- 15: Ringflansch
- 16: Ringnut
- 17: Antriebsbereich, beispielsweise Riffelung
- 18: Kern
- 19: Mischerflügel (des Innenkörpers 11)
- 20: Abschlusselement
- 21: Einlasskanäle
- 22: Rohrstutzen
- 23: Durchtrittsöffnung
- 24: Auslasskanal
- 25: Ringwulst
- 26: Antriebselement
- 27: Eintrittsbereich
- 28: Mischerflügel (des Gehäuses 10')
- 29: Mischerflügel (des Innenkörpers 11')

## Patentansprüche

1. Dynamischer Mischer, umfassend ein Gehäuse (10) und einen Innenkörper (11), die relativ zueinander um eine gemeinsame Achse drehbar sind und zumindest teilweise eine Mischkammer (12) bilden,
ein die Mischkammer (12) begrenzendes Abschlusselement (20) mit Einlassöffnungen (21) zur Zuführung der zu mischenden Komponenten, mindestens einen Auslass (24) zur Abgabe der Mischung, und
einen am drehbaren Teil des Mischers vorhandenen Antriebsbereich (17),
wobei der Innenkörper (11) und das Abschlusselement (20) den Stator des Mischers bilden, und wobei das Gehäuse (10) den Rotor des Mischers bildet.

2. Dynamischer Mischer nach Anspruch 1, wobei der Antriebsbereich (17) außermittig zur Achse angeordnet ist.

3. Dynamischer Mischer nach einem der vorhergehenden Ansprüche, wobei der Innenkörper (11) auf seiner Außenseite und das Gehäuse (10) an seiner Innenseite mit ineinandergreifenden Mischerflügeln (13, 19) versehen sind.

4. Mischer nach einem der vorhergehenden Ansprüche, wobei der Auslass (24) am vorderen Ende des Innenkörpers (11) vorgesehen ist.

5. Mischer nach einem der vorhergehenden Ansprüche, wobei das Gehäuse (10) an seinem Außenumfang einen Antriebsbereich (17) aufweist.

6. Mischer nach Anspruch 5, wobei der Antriebsbereich (17) kraftschlüssig angetrieben ist.

7. Mischer nach Anspruch 5, wobei der Antriebsbereich (17) formschlüssig angetrieben ist.

8. Kit, umfassend einen dynamischen Mischer nach einem der Ansprüche 1 bis 7 und eine Kartusche mit mindestens zwei Öffnungen und mindestens zwei Kammern zur Aufnahme getrennt zu lagernder Substanzen, wobei die Einlassöffnungen des Mischers mit den Auslassöffnungen der Kartusche reversibel verbindbar oder bereits fest verbunden sind.

9. Mischgerät, umfassend eine Fördereinheit für die zu mischenden Substanzen, ein Antriebselement und einen dynamischen Mischer nach einem der Ansprüche 1 bis 7, wobei das Antriebselement nicht in die gemeinsame Achse, die von Gehäuse und Innenkörper des Mischers gebildet wird, mündet.

10. Mischgerät nach Anspruch 9, wobei das Antriebselement gewählt ist aus: Mitnehmerstifte, Zahnrädern, Hohlritzeln, Reibrädern, Reibriemen, Zahnriemen.

11. Mischverfahren, umfassend die folgenden Schritte: a) Einbringen von mindestens zwei zu mischenden Substanzen in die Einlassöffnungen eines Mischers nach einem der Ansprüche 1 bis 7, b) Drehen des Gehäuses des Mischers.

12. Verwendung eines Mischers nach einem der Ansprüche 1 bis 7 oder eines Kits nach Anspruch 8 oder eines Mischgerätes nach Anspruch 9 zum Anmischen von Dentalmassen.

## Claims

1. A dynamic mixer comprising a housing (10) and an inner body (11), which can be rotated relative to one another about a common axis and, at least in part, form a mixing chamber (12),
a termination element (20), which bounds the mixing chamber (12) and has inlet openings (21) for feeding the components which are to be mixed, at least one outlet (24) for discharging the mixture, and
a drive region (17) which is provided on the rotatable part of the mixer, the inner body (11) and the termination element (20) forming the stator of the mixer, and the housing (10) forming the rotor of the mixer.

2. The dynamic mixer as claimed in claim 1, in which the drive region (17) is arranged eccentrically in relation to the axis.

3. The dynamic mixer as claimed in one of the preceding claims, in which interengaging mixer blades (13, 19) are provided on the outside of the inner body (11) and on the inside of the housing (10).

4. The mixer as claimed in one of the preceding claims, in which the outlet (24) is provided at the front end of the inner body (11).

5. The mixer as claimed in one of the preceding claims, in which the housing (10) has a drive region (17) on its outer circumference.

6. The mixer as claimed in claim 5, in which the drive region (17) is driven in a non-positively locking manner.

7. The mixer as claimed in claim 5, in which the drive region (17) is driven in a positively locking manner.

8. A kit comprising a dynamic mixer as claimed in one of claims 1 to 7 and a cartridge with at least two openings and at least two chambers for accommodating substances which are to be stored separately, it being the case that the inlet openings of the mixer can be connected reversibly, or are already connected fixedly, to the outlet openings of the cartridge.

9. A mixing arrangement comprising a delivery unit for the substances which are to be mixed, a drive element and a dynamic mixer as claimed in one of claims 1 to 7, the drive element not opening out into the common axis formed by the housing and inner body of the mixer.

10. The mixing arrangement as claimed in claim 9, the drive element being selected from carry-along pins, gearwheels, hollow pinions, frictional wheels, frictional belts and toothed belts.

11. A mixing process comprising the following steps: a) introducing into the inlet openings of a mixer as claimed in one of claims 1 to 7 at least two substances which are to be mixed, b) rotating the housing of the mixer.

12. Use of a mixer as claimed in one of claims 1 to 7 or of a kit as claimed in claim 8 or of a mixing arrangement as claimed in claim 9 for mixing dental compounds.

## Revendications

1. Mélangeur dynamique, comprenant un boîtier (10) et un corps interne (11), lesquels peuvent tourner autour d'un axe commun l'un par rapport à l'autre et forment au moins partiellement une chambre de mélange (12),
un élément de fermeture (20) limitant la chambre de mélange (12) avec des ouvertures d'entrée (21) pour l'introduction des composants à mélanger,
au moins une sortie (24) pour délivrer le mélange et
une région d'entraînement (17) située sur la partie rotative du mélangeur,
le corps interne (11) et l'élément de fermeture (20) formant le stator du mélangeur et le boîtier (10) formant le rotor du mélangeur.

2. Mélangeur dynamique selon la revendication 1, dans lequel la région d'entraînement (17) est disposée de manière excentrée par rapport à l'axe.

3. Mélangeur dynamique selon l'une quelconque des revendications précédentes, dans lequel le corps interne (11), sur son côté extérieur, et le boîtier (10), sur son côté intérieur, sont pourvus d'ailettes de mélange (13, 19) s'engageant les unes dans les autres.

4. Mélangeur selon l'une quelconque des revendications précédentes, dans lequel la sortie (24) est prévue à l'extrémité avant du corps interne (11).

5. Mélange selon l'une quelconque des revendications précédentes, dans lequel le boîtier (10) présente, sur sa périphérie extérieure, une région d'entraînement (17).

6. Mélangeur selon la revendication 5, dans lequel la région d'entraînement (17) est entraînée par force.

7. Mélangeur selon la revendication 5, dans lequel la région d'entraînement (17) est entraînée par emboîtement.

8. Kit, comprenant un mélangeur dynamique selon l'une quelconque des revendications 1 à 7, et une cartouche comprenant au moins deux ouvertures et au moins deux chambres pour recevoir des substances à stocker séparément, les ouvertures d'entrée du mélangeur pouvant être raccordées de manière réversible ou étant déjà raccordées fixement aux ouvertures de sortie de la cartouche.

9. Dispositif de mélange, comprenant une unité d'apport pour les substances à mélanger, un élément d'entraînement et un mélangeur dynamique selon l'une quelconque des revendications 1 à 7, dans lequel l'élément d'entraînement ne débouche pas dans l'axe commun formé par le boîtier et le corps interne du mélangeur.

10. Dispositif de mélange selon la revendication 9, dans lequel l'élément d'entraînement est sélectionné parmi : des broches d'entraînement, des roues dentées, des pignons creux, des roues de friction, des courroies de friction, des courroies dentées.

11. Procédé de mélange, comprenant les étapes suivantes : a) apport d'au moins deux substances à mélanger dans les ouvertures d'entrée d'un mélangeur selon l'une quelconque des revendications 1 à 7, b) rotation du boîtier du mélangeur.

12. Utilisation d'un mélangeur selon l'une quelconque des revendications 1 à 7 ou d'un kit selon la revendication 8 ou d'un dispositif de mélange selon la revendication 9 pour le mélange de compositions dentaires.
